# FASCICULE DE BREVET EUROPEEN

(11) **EP 0 683 582 B1**
(45) Date de publication et mention de la délivrance du brevet: **25.07.2001**
(21) Numéro de dépôt: 95401152.4
(22) Date de dépôt: 18.05.1995
(51) Int. Cl.: H04L 9/32

(54) **Procédé de réalisation d'une transaction électronique sécurisée utilisant le vérification de signatures numériques**
Verfahren zur Durchführung einer gesicherten elektronischen Transaktion unter Verwendung von digitaler Unterschriftsprüfung
Method for performing secure electronic transactions using digital signature verification

(30) Priorité: 20.05.1994 FR 9406188
(43) Date de publication de la demande: 22.11.1995
(73) Titulaire: FRANCE TELECOM, 75015 Paris (FR); LA POSTE, F-92777 Boulogne Billancourt (FR)
(72) Inventeur: Girault, Marc, F-14000 Caen (FR); Remery, Patrick, F-14000 Caen (FR); Vallee, Luc, F-14000 Caen (FR)
(74) Mandataire: Dubois-Chabert, Guy

(56) Documents cités:
- PROCEEDINGS OF THE CCITT PLENARY ASSEMBLY; BLUE BOOK DATA COMMUNICATIONS NETWORK DIRECTORY; RECOMMENDATIONS X.500 - X.521, 14 Novembre 1988 - 25 Novembre 1988 GENEVA (CH), pages 48-81, ' Volume VIII - Fascicle VIII.8 Recommendation X.509 THE DIRECTORY - AUTHENTICATION NETWORK'
- IEEE COMMUNICATIONS MAGAZINE, vol. 29, no. 6, Juin 1991 PISCATAWAY, NJ US, pages 42-48, XP 000235724 H.-P. KÖNIGS 'CRYPTOGRAPHIC IDENTIFICATION METHODS FOR SMART CARDS IN THE PROCESS OF STANDARDIZATION'

## Description

### Domaine technique

La présente invention a pour objet un procédé de réalisation d'une transaction électronique sécurisée.

L'invention porte plus spécialement sur des transactions électroniques établies entre deux entités, au cours desquelles des données sont échangées de façon à assurer leur authenticité (terme qui, dans la suite, couvrira les notions d'intégrité, c'est-à-dire de non-altération, et de non-duplication).

L'invention peut trouver une application dans le payement électronique, par exemple par carte à microprocesseur.

### Etat de la technique antérieure

Dans les transactions électroniques, l'authenticité des données échangées est habituellement garantie par une signature électronique de ces données. Le terme "signature électronique" doit être entendu ici au sens large : cette signature peut être obtenue à l'aide de mécanismes cryptographiques divers, à savoir des mécanismes de chiffrement, ou d'authentification, ou de signature au sens propre du terme. Elle peut être calculée à l'aide d'un algorithme symétrique (auquel cas la clé secrète de signature est, d'une façon ou d'une autre, partagée par les entités impliquées dans la transaction) ou à l'aide d'un algorithme asymétrique (auquel cas la clé secrète de signature n'est connue que de l'entité signataire).

Chaque entité dispose donc de moyens pour produire une signature électronique, ces moyens se décomposant traditionnellement en un algorithme de production et une clé secrète, en ce sens qu'elle n'est connue que de cette entité ou des deux entités impliquées dans la transaction (selon les modes de réalisation). De façon globale, on désignera par f_{A} la fonction qui, à partir de données D, fournit une signature électronique f_{A}(D) de ces données par l'entité A. De même, f_{B}(D) désignera la signature électronique des données D par l'entité B.

Afin que la signature de chaque entité puisse être vérifiée par l'autre, il faut également supposer que les entités A et B disposent de moyens cryptographiques qui leur permettent de vérifier les signatures produites par l'autre entité. Ces moyens se décomposent traditionnellement en un algorithme de vérification et une clé secrète partagée par les deux entités ou bien une clé publique liée à l'entité signataire (selon les modes de réalisation).

Une transaction électronique sécurisée typique se déroule alors en trois opérations ou échanges :
i) l'entité B envoie à l'entité A des données D₁ (et éventuellement une signature S₁ de tout ou partie de ces données).
ii) l'entité A envoie à l'entité B des données D₂ et calcule une signature S₂ portant sur tout ou partie des données D₁, D₂.
iii) l'entité B envoie à l'entité A des données D₃ et calcule une signature S₃ portant sur tout ou partie des données D₁, D₂, D₃.

A chaque échange, l'entité réceptrice vérifie la signature qu'elle reçoit. Dans certains cas, la transaction ne contient qu'une partie de ces échanges. Dans d'autres, elle contient des échanges supplémentaires.

Les données D₁, D₂, D₃ peuvent contenir des informations de nature très variable. En particulier, outre les identités des entités impliquées (qu'on notera par la suite Ai et Bi) et les informations caractéristiques de la transaction, ces données peuvent contenir des paramètres variant avec le temps. Le rôle de ces paramètres est de lutter contre les rejeux, c'est-à-dire contre les attaques consistant à épier une transaction légitime entre deux entités, puis à entamer une transaction illégitime avec l'une de ces entités en réutilisant tout ou partie des données et des signatures épiées lors de la transaction légitime.

Lorsque les données à signer sont nombreuses, la durée de la transaction peut se trouver exagérément allongée, surtout lorsque les entités impliquées, ou même seulement l'une d'entre elles, dispose(nt) de moyens de calculs rudimentaires (par exemple lorsqu'il s'agit de cartes à microcircuit).

La présente invention a justement pour but de remédier à cet inconvénient.

### Exposé de l'invention

A cette fin, l'invention propose un procédé qui réduit le nombre des calculs à effectuer. L'invention part de cette observation qu'il y a souvent une grande quantité de données communes entre celles qui doivent être signées par l'entité A au deuxième échange, et celles qui doivent être signées par l'entité B au troisième échange. Dans ces conditions, l'invention propose, lors du troisième échange, au lieu de signer l'ensemble des données dont il faut protéger l'authenticité, de faire signer à l'entité B tout ou partie de la signature S₂ que l'entité A a déjà produite lors du deuxième échange, ainsi que les données "restantes", c'est-à-dire celles que l'entité A n'a pas déjà signées au deuxième échange mais que l'entité B doit signer. Ainsi, au lieu de calculer S₃=f_{B}(D) où D est l'ensemble des données D₁, D₂, D₃, l'entité B a seulement besoin de calculer S₃=f_{B}(S'₂,Dᵣ) où S'₂ désigne tout ou partie de la signature S₂ et Dr désigne les données restantes. Le calcul nécessaire à la vérification se réduit dans la même proportion.

Un cas particulier est celui où il n'y a pas de données restantes, auquel cas S₃=f_{B}(S'₂). Ainsi, le calcul de la signature S₃ peut-il se trouver très réduit, ainsi que la durée totale de la transaction.

Par ailleurs, le procédé de l'invention permet de résoudre le problème qui se pose (uniquement avec les algorithmes symétriques) lorsque les entités A et B utilisent la même clé pour calculer leurs signatures et qu'elles ont à signer les mêmes données. Dans ce cas, S₃ serait identique à S₂ si l'invention n'était pas utilisée, et serait donc sans valeur (il suffirait à une fausse entité B de répéter la signature qu'elle a reçue de l'entité A). En utilisant l'invention, ce problème se trouve ipso facto résolu.

De plus, il se peut que l'utilisation même du procédé de l'invention, ait pour effet de réduire le nombre de données que l'entité A doit envoyer et éventuellement signer. Par exemple, si, dans les données envoyées (et éventuellement signées) par l'entité A, se trouve un nombre aléatoire, alors la partie S'₂ de la signature S₂ peut, dans l'invention, jouer ce rôle de nombre aléatoire et cela évite à l'entité A de l'envoyer et (éventuellement) de le signer.

De façon précise, la présente invention a donc pour objet un procédé de réalisation d'une transaction électronique sécurisée entre une entité A et une entité B, ce procédé comprenant une opération pendant laquelle l'entité A calcule une signature (S₂), l'entité B vérifiant cette signature et une opération pendant laquelle l'entité B calcule une signature (S3) l'entité A vérifiant cette signature, ce procédé étant caractérisé par le fait que l'entité B calcule une signature (S3) portant notamment sur une partie au moins de la signature (S2) précédemment calculée par l'entité A.

Selon un mode de mise en oeuvre, le procédé comprend les trois opérations suivantes, la première étant optionnelle :
i) l'entité B envoie à l'entité A des premières données (D1),
ii) l'entité A envoie à l'entité B des deuxièmes données (D2) et calcule une signature(S2) portant sur au moins une partie des premières et deuxièmes données (D1, D2), l'entité B vérifiant cette signature,
iii) l'entité B envoie à l'entité A des troisièmes données D3 et calcule une signature (S3), l'entité A vérifiant cette signature (S3) calculée par l'entité B.

Dans ce cas, le procédé de l'invention est caractérisé par le fait que la signature (S3) calculée par l'entité B lors de la troisième opération (iii) porte sur une partie au moins (S'2) de la signature (S2) calculée par l'entité A lors de la deuxième opération (ii) et sur la partie des données que l'entité B doit signer lors de la troisième opération (iii) que l'entité A n'a pas déjà signées lors de la deuxième opération (ii).

### Exposé détaillé de modes de réalisation

A titre d'exemple, on va décrire trois transactions qui tirent bénéfice de la présente invention, avec un nombre de calculs réduit, sans que soit abaissé le niveau de sécurité.

Le premier exemple est celui d'un protocole d'authentification d'entité issu de la norme ISO/IEC 9798-4 (actuellement au stade d'avant-projet) intitulée "Entity authentification using a cryptographic check-function"). Cette norme décrit des protocoles d'authentification à base d'un algorithme symétrique de signature. Il s'agit du protocole décrit dans le paragraphe 5.2.2, dont l'objet est de réaliser une authentification mutuelle entre A et B (qui partagent une clé secrète K_{AB}) en trois échanges ainsi décrits :
i) l'entité B envoie à l'entité A un nombre R_{B} et des données intitulées Text1.
ii) L'entité A envoie à l'entité B des données, constituées d'un nombre R_{A} et de données intitulées Text3, ainsi que la signature des données constituées de R_{A}, R_{B} de l'identité Bi de B et de données intitulées Text2. En d'autres termes, on a : S₂=f_{A}(R_{A}, R_{B}, Bᵢ, Text2) où f_{A} est calculée avec la clé secrète K_{AB} partagée par les entités A et B. La signature S₂ est vérifiée par l'entité B à l'aide de cette même clé.
iii) L'entité B envoie à l'entité A des données intitulées Text5 ainsi que la signature des données constituées de R_{B}, de R_{A} et de données Text4. En d'autres termes on a : S₃=f_{B}(R_{B}, R_{A}, Text4) où f_{B} est également calculée avec la clé secrète partagée par les entités A et B (dans ce cas particulier : f_{B}=f_{A}). La signature S₃ est vérifiée par l'entité A à l'aide cette même clé.

Si l'on remplace S₃ par S'₃=f_{B}(S₂, Text'4) où Text'4 désigne les données de Text4 qui ne sont pas déjà incluses dans Text2, alors le temps de production de la signature se trouve réduit et le temps de vérification également. Si, par exemple f_{B} est calculée à partir de l'algorithme de chiffrement DES dans le mode décrit dans la norme ISO 9797 (mode apparenté au mode CBC de l'algorithme DES) avec une longueur de signature égale à 64 bits et si l'on suppose, pour fixer les idées, que le temps d'exécution d'un DES est de 50 ms, et que les nombres aléatoires ont une longueur de 64 bits, alors l'invention permet d'économiser 2.50 ms=100 ms au minimum sur le temps total de la transaction et, plus généralement 2(t+1).50 ms où t est le nombre de blocs de 64 bits, le dernier éventuellement incomplet, contenus dans les données communes à Text2 et Text4. Si Text2=Text4, alors Text'4 est vide et l'on a économisé 2(t+1).50 ms où t est le nombre de blocs de 64 bits de Text2. De plus, si l'on fait jouer à S₂ le rôle de R_{A}, alors les données envoyées à l'étape (ii) peuvent se réduire à Text3 et S₂=f_{A}(R_{B}, Bᵢ, Text2), ce qui permet d'économiser la transmission de RA (64 bits) et deux exécutions DES supplémentaires (100 ms) pour le calcul de S₂ et pour la vérification.

Les nombres R_{A} et R_{B} peuvent être des nombres aléatoires tirés par les entités A et B ou des nombres incrémentés chaque fois que l'entité correspondante participe à un échange avec l'autre.

Le deuxième exemple est celui d'un échange de monnaie électronique entre une entité A habilitée à être créditée et une entité B habilitée à être débitée. Cet échange est supposé utiliser un algorithme symétrique. Un tel échange est décrit par un projet de norme du CEN, et est analogue au protocole précédent, à ceci près que le paramètre variant avec le temps n'est pas un nombre aléatoire mais le contenu d'un compteur détenu par chacune des entités, et incrémenté à chaque fois que cette entité participe à un échange de monnaie électronique. Avec les notations de la norme 9798-2, cet échange est tel que Text2 est peu différent de Text4, chacun de ces champs contenant les deux valeurs des compteurs définis ci-dessus. Dans un échange typique, on a t=2, et l'on a alors économisé 2. (2+1) .50 ms=0,3 s, ce qui est important quand on sait qu'un échange de monnaie électronique ne devrait pas durer plus d'une seconde. On résout également le problème mentionné plus haut, qui se pose dès lors que les entités A et B ont les mêmes données à signer et qu'elles utilisent la même clé pour calculer cette signature.

Le troisième exemple est celui d'un protocole d'authentification d'entité issu de la norme ISO/IEC 9798-3 intitulée "Entity authentification using a public key algorithm". Cette norme décrit des protocoles d'authentification à base d'un algorithme asymétrique de signature. Il s'agit du protocole décrit dans le paragraphe 5.2.2 dont l'objet est de réaliser une authentification mutuelle entre A et B en trois échanges ainsi décrits :
i) l'entité B envoie à l'entité A un nombre R_{B} et des données intitulées Text1.
ii) L'entité A envoie à l'entité B des données constituées d'un nombre R_{A}, de l'identité Bi de B et de données intitulées Text3, ainsi que la signature des données R_{A}, R_{B}, Bᵢ et de données intitulées Text2. En d'autres termes, on a : S₂=f_{A}(R_{A}, R_{B}, Bᵢ, Text2) où f_{A} est calculée avec la clé secrète de signature de A. La signature S₂ est vérifiée par B avec la clé publique correspondante.
iii) L'entité B envoie à l'entité A des données constituées de R_{B}, R_{A}, de l'identité Ai de A et de données intitulées Text5, ainsi que la signature des données R_{B}, R_{A}, A et de données intitulées Text4. En d'autres termes, on a : S₃=f_{B}(R_{B}, R_{A}, Aᵢ, Text4) où f_{B} est calculée avec la clé secrète de signature de B. La signature S₃ est vérifiée par A avec la clé publique correspondante.

Là encore R_{A} et R_{B} peuvent être des nombres aléatoires ou incrémentés.

Si l'on remplace S₃ par S'₃=f_{B}(S'₂, Aᵢ, Text'4), où S'₂ désigne une partie de S₂ de même longueur que R_{A} ou R_{B} et où Text'4 désigne les données de Text4 qui ne sont pas déjà incluses dans Text2, alors le temps de production de la signature se trouve réduit et le temps de vérification également. Si, par exemple, f_{A} et f_{B} sont calculées en condensant préalablement les données à signer avec une fonction de hachage telle que celle décrite dans la norme 10118-2 (en option "double longueur" et avec DES) et si l'on suppose, pour fixer les idées, que le temps d'exécution d'un DES est de 50 ms et que les nombres aléatoires ont une longueur de 64 bits, alors l'invention permet d'économiser 2.2.50 ms=200 ms minimum et, plus généralement, 4(t+1).50 ms où t est le nombre de blocs de 64 bits, le dernier éventuellement incomplet contenu dans les données communes à Text2 et Text4. Si Text2=Text4, alors Text'4 est vide et l'on a économisé 4(t+1).50 ms où t est le nombre de blocs de 64 bits de Text2.

De plus, si l'on fait jouer à S'₂ le rôle de R_{A}, alors les données envoyées à l'étape (ii) peuvent se réduire à R_{B}, B, Text3 et S₂=f_{A}(R_{B}, B, Text2), ce qui permet d'économiser la transmission de RA (64 bits) et quatre exécutions supplémentaires de DES (200 ms), pour le calcul de S₂ et pour sa vérification.

## Revendications

1. Procédé de réalisation d'une transaction électronique sécurisée entre une entité A et une entité B, ce procédé comprenant une opération pendant laquelle l'entité A calcule une signature (S₂), l'entité B vérifiant cette signature et une opération pendant laquelle l'entité B calcule une signature (S₃) l'entité A vérifiant cette signature, ce procédé étant caractérisé par le fait que l'entité B calcule une signature (S₃) portant notamment sur une partie au moins de la signature (S₂) précédemment calculée par l'entité A.

2. Procédé selon la revendication 1 comprenant les opérations suivantes, la première étant optionnelle :
i) l'entité B envoie à l'entité A des premières données (D1),
ii) l'entité A envoie à l'entité B des deuxièmes données (D2) et calcule une signature(S2) portant sur au moins une partie des premières et deuxièmes données (D1, D2), l'entité B vérifiant cette signature,
iii) l'entité B envoie à l'entité A des troisièmes données D3 et calcule une signature (S3), l'entité A vérifiant cette signature calculée par l'entité B,
ce procédé étant caractérisé par le fait que la signature (S3) calculée par l'entité B lors de la troisième opération (iii) porte sur une partie au moins (S'2) de la signature (S2) calculée par l'entité A lors de la deuxième opération (ii) et sur la partie des données que l'entité B doit signer lors de la troisième opération (iii) que l'entité A n'a pas déjà signées lors de la deuxième opération (ii).

3. Procédé selon la revendication 2, dans lequel l'entité A et l'entité B partagent une même clé secrète (K_{AB}) permettant à chaque entité de calculer les signatures, ce procédé étant caractérisé par le fait qu'il comprend les trois opérations suivantes :
i) l'entité B envoie à l'entité A des premières données (Dl) constituées par un nombre R_{B} et des données intitulées Textl,
ii) l'entité A envoie à l'entité B des deuxièmes données (D2) constituées d'un nombre RA et de données intitulées Text3, l'entité A calcule à l'aide de la clé secrète (K_{AB}) une signature (32) portant sur les données R_{A} et R_{B}, sur l'identité Bi de l'entité B et des données Text2, l'entité B vérifiant cette signature à l'aide de la même clé (K_{AB}),
iii) l'entité B envoie à l'entité A des troisièmes données (D3) constituées par des données intitulées Text5 et calcule, à l'aide de la clé (K_{AB}), une signature (S₃) portant sur la partie non commune (Text'4) entre les données que l'entité B doit signer et les données Text2 qui ont déjà été signées par l'entité A, l'entité A vérifiant cette signature à l'aide de la clé secrète (K_{AB}).

4. Procédé selon la revendication 3, caractérisé par le fait que les nombres R_{A} et R_{B} envoyés respectivement par les entités A et B sont des nombres aléatoires tirés respectivement par les entités A et B.

5. Procédé selon la revendication 3, caractérisé par le fait que les nombres R_{A} et R_{B} envoyés respectivement par les entités A et B sont des nombres qui sont incrémentés respectivement par l'entité A et par l'entité B chaque fois que l'entité correspondante participe à un échange avec l'autre.

6. Procédé selon la revendication 3, dans lequel l'entité A est pourvue d'une première clé secrète de signature (fA) à laquelle correspond une première clé publique, et l'entité B est pourvue d'une seconde clé secrète de signature (fB) à laquelle correspond une seconde clé publique, ce procédé étant caractérisé par le fait qu'il comprend les trois opérations suivantes :
i) l'entité B envoie à l'entité A des données (D1) constituées par un nombre R_{B} et par des données intitulées Text1,
ii) l'entité A envoie à l'entité B des données (D2) constituées par un nombre R_{A}, par ledit nombre R_{B} envoyé par l'entité B, par l'identité Bi de l'entité B, et par des données intitulées Text3 et calcule en utilisant la première clé secrète (fA) une signature portant sur R_{A}, R_{B}, Bi, et des données intitulées Text2, l'entité B vérifiant cette signature à l'aide de la première clé publique,
iii) l'entité B envoie à l'entité A des troisièmes données (D3) constituées par les nombres R_{B} et R_{A}, par l'identité Ai de l'entité A et par des données de texte intitulées Text5, et calcule, à l'aide de la seconde clé secrète (fB) la signature (S₃) d'une partie de la signature (S2) calculée par l'entité A lors de l'opération précédente (ii), de l'identité Ai de l'entité A et de la partie non commune entre les données Text2 et des données Text4 que l'entité B doit signer, l'entité A vérifiant cette signature à l'aide de la seconde clé publique.

7. Procédé selon la revendication 6, caractérisé par le fait que les nombres R_{A} et R_{B} sont des nombres aléatoires tirés respectivement par les entités A et B.

8. Procédé selon la revendic ation 6, caractérisé par le fait que les nombres R_{A} et R_{B} sont des nombres incrémentés respectivement par l'entité A et par l'entité B, chaque fois que l'entité correspondante participe à un échange avec l'autre.

9. Procédé selon l'une quelconque des revendications 2 à 8, caractérisé par le fait que l'entité B ne devant signer lors de la troisième opération (iii) que des données qui ont déjà été signées par A dans la deuxième opération (ii), la signature (S₃) calculée par l'entité B ne porte que sur une partie au moins de la signature (S₂) produite par l'entité A au cours de la deuxième opération (ii).

10. Procédé selon l'une quelconque des revendications 2 à 9, caractérisé par le fait que dans la première opération (i) l'entité B calcule une signature (S1) portant sur une partie au moins des premières données (D1), et envoye cette signature à l'entité A, celle-ci vérifiant la signature (S1).

11. Procédé selon l'une quelconque des revendications 2 à 10, caractérisé par le fait que, dans les données envoyées par l'entité A se trouve un nombre aléatoire, et que la partie (S'₂) de la signature (S₂) joue le rôle de ce nombre aléatoire, l'entité A n'envoyant pas ce nombre aléatoire.

## Patentansprüche

1. Verfahren zur Durchführung einer gesicherten, elektronischen Transaktion zwischen einer Einheit A und einer Einheit B, wobei das Verfahren eine Operation umfasst, während der die Einheit A eine Signatur (S₂) berechnet, die Einheit B diese Signatur verifiziert, sowie eine Operation, während der die Einheit B eine Signatur (S₃) berechnet, die Einheit (A) die Signatur verifiziert, wobei das Verfahren **dadurch gekennzeichnet** ist, dass die Einheit B eine Signatur (S₃) berechnet, die sich insbesondere über mindestens einen Teil der Signatur (S₂) erstreckt, die vorausgehend von der Einheit A berechnet wurde.

2. Verfahren nach Anspruch 1, das die folgenden Operationen umfasst, deren erste wahlweise ist:
i) die Einheit B schickt erste Daten (D1) zu der Einheit A,
ii) die Einheit A schickt zweite Daten (D2) zu der Einheit B und berechnet eine Signatur (S2), die sich über mindestens einen Teil der ersten und der zweiten Daten (D1, D2) erstreckt, wobei die Einheit B diese Signatur verifiziert,
iii) die Einheit B schickt dritte Daten (D3) zu der Einheit A und berechnet eine Signatur (S3), wobei die Einheit A diese von der Einheit B berechnete Signatur verifiziert,
wobei das Verfahren **dadurch gekennzeichnet** ist, dass sich die Signatur (S3), die während der dritten Operation (iii) von der Einheit B berechnet worden ist, über mindestens einen Teil (S'2) der Signatur (S2), die durch die Einheit A während der zweiten Operation (ii) berechnet worden ist, und über einen Teil der Daten erstreckt, die die Einheit B bei der dritten Operation (iii) signieren soll, die die Einheit A nicht schon während der zweiten Operation (ii) signiert hat.

3. Verfahren nach Anspruch 2, bei dem sich die Einheit A und die Einheit B einen selben Geheimschlüssel (K_{AB}) teilen, der jeder Einheit erlaubt, die Signaturen zu berechnen, wobei das Verfahren **dadurch gekennzeichnet** ist, dass es die drei folgenden Operationen umfasst:
i) die Einheit B schickt zu der Einheit A erste Daten (D1), die von einer Zahl R_{B} und von Daten gebildet sind, die mit Text1 bezeichnet sind,
ii) die Einheit A schickt zu der Einheit B zweite Daten (D2), die von einer Zahl R_{A} und von mit Text3 bezeichneten Daten gebildet sind, die Einheit A berechnet mit Hilfe des Geheimschlüssels (K_{AB}) eine Signatur (S2), die sich über die Daten R_{A} und R_{B}, über die Identität Bᵢ der Einheit B und Daten von Text2 erstreckt, die Einheit B verifiziert diese Signatur mit Hilfe des selben Schlüssels (K_{AB}),
iii) die Einheit B schickt der Einheit A dritte Daten (D3), die von mit Text5 bezeichneten Daten gebildet sind, und berechnet mit Hilfe des Schlüssels (K_{AB}) eine Signatur (S₃), die sich über den nichtgemeinsamen Teil (Text'4) zwischen den Daten, die die Einheit B signieren soll, und den Daten Text2 erstreckt, die bereits von der Einheit A signiert worden sind, wobei die Einheit A diese Signatur mit Hilfe des Geheimschlüssels (A_{AB}) verifiziert.

4. Verfahren nach Anspruch 3, **dadurch gekennzeichnet,** dass die Zahlen R_{A} und die R_{B}, die jeweils von den Einheiten A und B geschickt worden sind, Zufallszahlen sind, die jeweils von den Einheiten A und B gezogen worden sind.

5. Verfahren nach Anspruch 3, **dadurch gekennzeichnet,** dass die Zahlen R_{A} und die R_{B}, die jeweils von den Einheiten A und B geschickt worden sind, Zahlen sind, die jeweils durch die Einheit A und durch die Einheit B jedes Mal erhöht werden, wenn die entsprechende Einheit an einem Austausch mit der anderen teilnimmt.

6. Verfahren nach Anspruch 3, bei dem die Einheit A mit einem ersten Geheimschlüssel mit der Signatur (fA) versehen ist, dem ein erster öffentlicher Schlüssel entspricht, und die Einheit B mit einem zweiten Geheimschlüssel mit der Signatur (fB) versehen ist, ein zweiter öffentlicher Schlüssel entspricht, wobei das Verfahren **dadurch gekennzeichnet** ist, dass es die drei folgenden Operationen umfasst:
i) die Einheit B schickt der Einheit A Daten (D1), die von einer Zahl R_{B} und von mit Text1 bezeichneten Daten gebildet sind,
ii) die Einheit A schickt der Einheit B Daten (D2), die von einer Zahl R_{A}, von der genannten Zahl R_{B}, die von der Einheit B geschickt wurde, von der Kennung Bi der Einheit B und von mit Text3 bezeichneten Daten gebildet sind, und berechnet, wobei der erste Geheimschlüssel (fA) verwendet wird, eine Signatur, die sich über R_{A}, R_{B}, Bi und mit Text2 bezeichnete Daten erstreckt, die Einheit B verifiziert diese Signatur mit Hilfe des ersten, öffentlichen Schlüssels,
iii) die Einheit B schickt der Einheit A dritte Daten (D3), die durch die Zahlen R_{B} und R_{A}, die Kennung Ai der Einheit A und die mit Text5 bezeichneten Text-daten gebildet sind, und berechnet mit Hilfe des zweiten Geheimschlüssels (fB), der Kennung Ai der Einheit A und des nichtgemeinsamen Teils zwischen den Daten Text2 und den Daten Text4, die die Einheit B signieren soll, die Signatur (S3) eines Teils der von der Einheit A bei der vorhergehenden Operation (ii) berechneten Signatur (S₂), die Einheit A verifiziert diese Signatur mit Hilfe des zweiten, öffentlichen Schlüssels.

7. Verfahren nach Anspruch 6, **dadurch gekennzeichnet,** dass die Zahlen R_{A} und die R_{B}, die jeweils zu den Einheiten A und B geschickt worden sind, Zufallszahlen sind, die jeweils von den Einheiten A und B gezogen worden sind.

8. Verfahren nach Anspruch 6, **dadurch gekennzeichnet,** dass die Zahlen R_{A} und die R_{B} Zahlen sind, die jeweils durch die Einheit A und durch die Einheit B jedes Mal erhöht werden, wenn die entsprechende Einheit an einem Austausch mit der anderen teilnimmt.

9. Verfahren nach einem der Ansprüche 2 bis 8, **dadurch gekennzeichnet,** dass die Einheit B bei der dritten Operation (iii) nur Daten signieren soll, die bereits von A bei der zweiten Operation (ii) signiert worden sind, wobei sich die Signatur (S₃), die von der Einheit B berechnet worden ist, nur über mindestens einen Teil der Signatur (S₂) erstreckt, die durch die Einheit A während der zweiten Operation (ii) erzeugt worden ist.

10. Verfahren nach einem der Ansprüche 2 bis 9, **dadurch gekennzeichnet,** dass die Einheit B bei der ersten Operation (i) eine Signatur (S1) berechnet, die sich über mindestens einen Teil der ersten Daten (D1) erstreckt, und diese Signatur zu der Einheit A schickt, wobei diese die Signatur (S1) verifiziert.

11. Verfahren nach einem der Ansprüche 2 bis 10, **dadurch gekennzeichnet,** dass sich unter den von der Einheit A geschickten Daten eine Zufallszahl befindet, und dass der Teil (S'₂) der Signatur (S₂) die Rolle dieser Zufallszahl spielt, wobei die Einheit A diese Zufallszahl nicht schickt.

## Claims

1. Method of performing a secure electronic transaction between an entity A and an entity B, this process comprising an operation during which the entity A calculates a signature (S₂), the entity B verifying this signature and an operation during which the entity B calculates a signature (S₃), the entity A verifying this signature, this process being characterised by the fact that the entity B calculates a signature (S₃) bearing at least one part of the signature (S₂) previously calculated by the entity A.

2. Method according to Claim 1 comprising the following operations, the first being optional:
i) the entity B sends first data (D1) to the entity A,
ii) the entity A sends second data (D2) to the entity B and calculates a signature (S2) carrying on at least one part first and second data (D1, D2), the entity B verifying this signature,
iii) the entity B sends third data D3 to the entity A and calculates a signature (S3), the entity A verifying this signature calculated by the entity B, this method being characterised by the fact that the signature (S3) calculated by the entity B during the third operation (iii) bears at least one part (S'2) of the signature (S2) calculated by the entity A during the second operation (ii) and part of the data that the entity B has to sign during the third operation (iii) and which the entity A has not already signed during the second operation (ii).

3. Method according to Claim 2, in which the entity A and the entity B share the same secret key (K_{AB}) allowing each entity to calculate the signatures, this process being characterised by the fact that it comprises the following three operations:
i) the entity B sends to the entity A the first data (D1) constituted by a number R_{B} and data entitled Text1,
ii) the entity A sends to the entity B second data (D2) constituted by a number R_{A} and data entitled Text3, the entity A calculates with the aid of the secret key (K_{AB}) a signature (S2) bearing the data R_{A} and R_{B}, the identity Bi of the entity B of the data Text2, the entity B verifying this signature with the aid of the same key (K_{AB}),
iii) the entity B sends to the entity A third data (D3) constituted by data entitled Text5 and calculates, with the aid of the key (K_{AB}), a signature (S₃) bearing the part (Text'4) which is not common between the data which the entity B has to sign and the data Text2 which has already been signed by the entity A, the entity A verifying this signature with the aid of the secret key (K_{AB}).

4. Method according to Claim 3, characterised by the fact that the numbers R_{A} and R_{B} sent respectively by the entities A and B are random numbers derived from the entities A and B respectively.

5. Method according to Claim 3, characterised by the fact that the numbers R_{A} and R_{B} sent respectively by the entities A and B are numbers which are incremented respectively by the entity A and by the entity B each time the corresponding entity participates in an exchange with the other.

6. Method according to Claim 3, in which the entity A is provided with a first secret signature key (fA) to which a first public key corresponds, and the entity B is provided with a second secret signature key (fB) to which a second public key corresponds, this method being characterised by the fact that it comprises the following three operations:
i) the entity B sends to the entity A data (D1) constituted by a number R_{B} and by data entitled Text1,
ii) the entity A sends to the entity B data (D2) constituted by a number R_{A} by the said number R_{B} sent by the entity B, by the identity Bi of the entity B and by data entitled Text3 and calculates using the first secret key (fA) a signature embodying R_{A}, R_{B}, Bi and data entitled Text2, the entity B verifying this signature with the aid of the first public key,
iii) the entity B sends to the entity A third data (D3) constituted by the numbers R_{B} and R_{A}, by the identity Ai of the entity A and by text data entitled Text5, and calculates, with the aid of the second secret key (fB) the signature (S₃) of a part of the signature (S2) calculated by the entity A during the preceding operation (ii), of the identity Ai of the entity A and of the part which is not common between the data Text2 and the data Text4 which the entity B has to sign, the entity A verifying this signature with the aid of the second public key.

7. Method according to Claim 6, characterised by the fact that the numbers R_{A} and R_{B} are random numbers derived from the entities A and B respectively.

8. Method according to Claim 6, characterised by the fact that the numbers R_{A} and R_{B} are numbers incremented respectively by the entity A and by the entity B, each time the corresponding entity participates in an exchange with the other.

9. Method according to any one of Claims 2 to 8, characterised by the fact that the entity B only need sign during the third operation (iii) data which have already been signed by A in the second operation (ii), the signature (S₃) calculated by the entity B bears only at least one part of the signature (S₂) produced by the entity A in the course of the second operation (ii).

10. Method according to any one of Claims 2 to 9, characterised by the fact that in the first operation (i) the entity B calculates a signature (S1) bearing on one part at least first data (D1), and sends this signature to the entity A, the latter verifying the signature (S1).

11. Method according to any one of Claims 2 to 10, characterised by the fact that a random number is present in the data sent by the entity A, and that the role of this random number is played by the part (S'₂) of the signature (S₂), the entity A not sending this random number.
